# EUROPEAN PATENT SPECIFICATION

(11) **EP 2 982 029 B1**
(45) Date of publication and mention of the grant of the patent: **30.12.2020**
(21) Application number: 14724245.7
(22) Date of filing: 01.04.2014
(51) Int. Cl.: H02M 1/32, H02M 3/158

(54) **OVER-CURRENT PROTECTION FOR A VOLTAGE REGULATOR**
ÜBERSTROMSCHUTZ FÜR EINEN SPANNUNGSREGLER
PROTECTION CONTRE LES SURINTENSITÉS À RÉGULATEUR DE TENSION

(30) Priority: 01.04.2013 US 201361807212 P; 09.01.2014 US 201414151725
(43) Date of publication of application: 10.02.2016
(73) Proprietor: Qualcomm Incorporated, San Diego, CA 92121-1714 (US)
(72) Inventor: KOSKI, Marko, San Diego, California 92121-1714 (US)
(74) Representative: Klang, Alexander H.
(86) International application number: PCT/US2014/032489
(87) International publication number: WO 2014/165486

(56) References cited:
- EP-A1- 2 515 422
- GB-A- 2 447 875
- US-A- 4 447 841
- US-A1- 2006 164 774
- US-A1- 2006 290 333

## Description

### BACKGROUND

### Field

The present invention relates generally to voltage regulators. More specifically, the present invention relates to embodiments for protecting buck regulators against over-current.

### Background

Wireless communication devices require a battery or external DC power supply for a power source. Within a wireless communication device, there are integrated circuits (ICs), which typically operate at a much lower DC voltage than either a battery or an external DC power supply attached to the wireless communication device. To facilitate integrated circuits operation at a low operating voltage, a switching voltage regulator is usually required to convert either an external DC power supply or battery voltage to the integrated circuits lower supply voltage. A switching voltage regulator is a control circuit configured for rapidly switching power transistors (e.g., MOSFETs) on and off in order to stabilize an output voltage or current. Switching regulators are typically used as replacements for the linear regulators when higher efficiency, smaller size or lighter weight is required. However, switching regulators are more complicated and their switching currents can cause noise problems if not carefully suppressed.

A buck regulator, which is an example of a switching regulator, is a step-down DC-to-DC converter. A buck regulator typically includes two switches (e.g., a transistor and a diode) as well as an inductor and a capacitor for filtering of an output voltage ripple. A synchronous buck regulator is a modified version of the basic buck regulator circuit topology in which the diode is replaced by a second transistor. Generally, a buck regulator alternates between connecting the inductor to a source voltage to store energy in the inductor ("on state") and discharging the inductor into a load ("off state"). Attention is drawn to GB 2 447 875 A which describes that under normal conditions a switch connecting a power supply to an inductor of a power converter is switched in opposition to a diode bypass switch. Under conditions such as a short circuit switch may be kept open and the inductor current passes through diode so that there is a voltage across the inductor and the inductor current decays sufficiently to compensate for a rapid increase in inductor current when the supply is applied, when the switch is on. A controller may determine that switch is to be kept off by detecting when a voltage on the output is less than a threshold or when the current returning to the supply exceeds a threshold. The controller may determine that switch is turned off and switch is turned on when the inductor current exceeds a limit value, adjusted according to the voltage error and switch may be kept open if the limit value exceeds a threshold. The first switch may be closed for a minimum blanking period to allow for transient surges. The power converter may be used to power an audio player, computer, mobile communicator, satellite navigator, a camera or a hand held device in a vehicle.
Attention is further drawn to EP 2 515 422 A1 describes circuits and methods for dynamic adjustment of the current limit of a power management unit to avoid unwanted automatic interruption of the power flow. This can be applied to switched and linear DC-to-DC converters. The power management unit is automatically adjusted to the output resistance of a power source (including interconnect resistance). This maximizes the time and hence the power transferred from a power management unit to the system (including the battery, in case of battery operated systems). The input current is reduced, thus increasing the input voltage in case of a high voltage drop across the internal resistance including interconnections between power source and power management unit.

Further attention is drawn to US 2006/164774 A1 describing a system for providing power over the Ethernet which includes a current limit circuit for preventing an output current from exceeding a current threshold set at a prescribed level, and a foldback circuit for reducing the current threshold when an output voltage is lower than a prescribed voltage value. The foldback circuit may be controlled to operate in a high-power mode to increase the current threshold above the prescribed level.

A need exists for an enhanced buck regulator. More specifically, a need exists for embodiments related to protecting buck regulators against over-current conditions. The present invention provides a respective device according to claim 1 and a corresponding method according to claim 7. Preferred embodiments are defined in the dependent claims.

### BRIEF DESCRIPTION OF THE DRAWINGS

FIG. 1 illustrates a buck regulator including a plurality of transistors.
FIG. 2 illustrates a device including a regulator, according to an exemplary embodiment of the present invention.
FIG. 3 depicts another device including a regulator, in accordance with an exemplary embodiment of the present invention.
FIG. 4 is a flowchart depicting a method, according to an exemplary embodiment of the present invention.
FIG. 5 is a plot depicting various signals of a regulator.
Fig. 6 is another plot depicting a signal that represents a current through inductor of a regulator.
FIG. 7 is yet another plot depicting signal indicative of a regulator exiting a foldback mode and resuming normal duty cycle operation.
FIG. 8 is a flowchart depicting a method, in accordance with an exemplary embodiment of the present invention.
FIG. 9 is a flowchart depicting another method, in accordance with an exemplary embodiment of the present invention.
FIG. 10 illustrates a device including a regulator, in accordance with an exemplary embodiment of the present invention.

### DETAILED DESCRIPTION

The detailed description set forth below in connection with the appended drawings is intended as a description of exemplary embodiments of the present invention and is not intended to represent the only embodiments in which the present invention can be practiced. The term "exemplary" used throughout this description means "serving as an example, instance, or illustration," and should not necessarily be construed as preferred or advantageous over other exemplary embodiments. The detailed description includes specific details for the purpose of providing a thorough understanding of the exemplary embodiments of the invention. It will be apparent to those skilled in the art that the exemplary embodiments of the invention may be practiced without these specific details. In some instances, well-known structures and devices are shown in block diagram form in order to avoid obscuring the novelty of the exemplary embodiments presented herein.

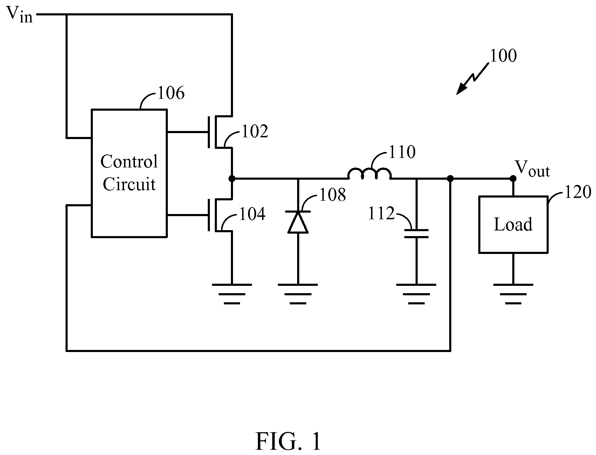

FIG. 1 illustrates a buck regulator 100, which may be used to decrease a voltage from a battery and supply a DC voltage to an electronic device. Buck regulator 100 includes transistors 102 and 104, each of which that are controlled by a controller 106. Buck regulator 100 also includes a diode 108, a capacitor 112, an inductor 110, and a load 120, which receives an output voltage of the buck regulator 100. As will be understood, controller 106 is configured to vary the duty cycles at which the transistors 102 and 104 are turned on to alternately connect and disconnect inductor 110 to and from source voltage (Vin). As inductor 110 stores energy and discharges the energy, it produces the output voltage Vout, which is somewhat smaller than source voltage Vin.

Buck regulators are generally required to provide protection against short circuiting to ground at a regulated output node. Active current limiting may be implemented as peak current detection to decide when to override a normal control loop to turn off a p-type field effect transistor (PFET) of a regulator and turn on an n-type field effect transistor (NFET) of the regulator. A decision must be made as to what event to use to turn off the NFET and turn on the PFET and give the normal control loop an opportunity to resume control. Example implementations include using the rising edge of a buck switching clock or using a constant NFET on time value. Both of these methods exhibit problems when the output voltage is low or in a ground fault condition since there is often not enough negative differential across the inductor when the NFET is on to discharge the all the inductor energy that was added when the PFET was on. If such a condition exists, multiple consecutive cycles of a net increase in the inductor current will result in a condition called current limit runaway.

Practical limitations on the current limit detection speed require the PFET to be on for a minimum amount of time in order to declare a valid over-current condition. This results in finite overshoot of the desired current limit threshold. At low output voltages, the overshoot magnitude is largest. Overshoot results in more energy added while the PFET is on, and faults to ground keep the energy from being fully dissipated while the NFET is on, resulting in a worst case situation for runaway concerns. Current limit runaway can be a serious problem for reliability of the power FETs and the inductor. It can also lead to undesirable inrush currents that can overtax battery powered applications.

Exemplary embodiments, as described herein, are directed to devices and methods related to over-current protection for a voltage regulator. According to one exemplary embodiment, a device may include an inductor selectively coupled to an output and a power supply. The device may further include a controller configured to detect an over-current event if an amount of current flowing from the power supply to the inductor is equal to or greater than a current threshold. The controller may also be configured to detect a low-voltage event if a voltage at the output is less than or equal to a reference voltage. Moreover, in response to the over-current event and the low-voltage event, the controller may be configured to prevent current from flowing from the power supply to the inductor until substantially all energy stored by the inductor has been dissipated.

According to another exemplary embodiment, the present invention includes methods for protecting a voltage regulator from current runaway. Various embodiments of such a method may include comparing an output voltage of a voltage regulator to a reference voltage and comparing a current through an inductor of the regulator to a threshold current. Further, the method may include dissipating all energy stored by the inductor if the current through the inductor is greater than or equal to the threshold current and the output voltage is less than or equal to the reference voltage.

Other aspects, as well as features and advantages of various aspects, of the present invention will become apparent to those of skill in the art through consideration of the ensuing description, the accompanying drawings and the appended claims.

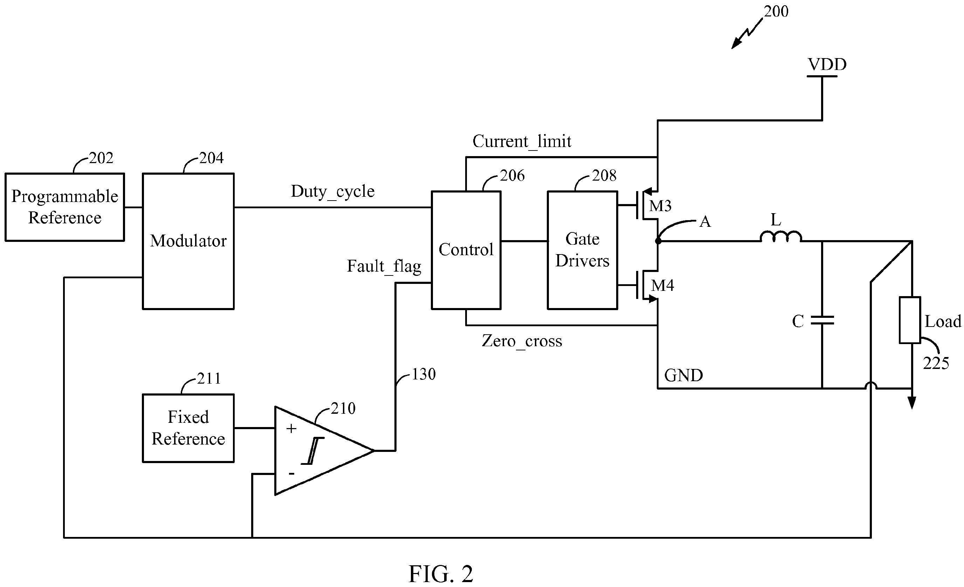

FIG. 2 illustrates a device 200, in accordance with an exemplary embodiment of the present invention. By way of example, device 200 may comprise a buck regulator. Device 200 includes a programmable reference unit 202, a modulator 204, a controller 206, and gate drivers 208. An output of programmable reference unit 202 is coupled to one input of modulator 204, and an output of modulator 204 is coupled to one input of controller 206. Moreover, an output of controller 206 is coupled to an input of gate drivers 208.

Device 200 further includes transistors M3 and M3 coupled between a supply voltage VDD and a ground voltage GND. More specifically, a source of transistor M3 is coupled to supply voltage VDD and a source of transistor M4 is coupled to ground voltage GND. Further, a drain of transistor M3 is coupled to a drain of transistor M4 at a node A, which may also be referred to as a "switching node." In addition, a gate of each of transistor M3 and transistor M4 is coupled to and configured to receive a signal from gate drivers 208. Transistors M3, which may comprise a PFET, may also be referred to herein as a "high side FET." Further, Transistors M4, which may comprise an NFET, may also be referred to herein as a "low side FET." Device 200 further includes an inductor L having one end coupled to node A and another end coupled to an output Vout. In addition, device 200 includes a capacitor C coupled between output Vout and ground voltage GND, and a load 225, also coupled between output Vout and ground voltage GND.

As will be understood by a person having ordinary skill in the art, programmable reference unit 202 and modulator 204 provide a signal having a desired duty cycle to controller 206. Based on the duty cycle, controller 206 and gate drivers 208 may be configured to turn transistor M3 "on" and "off' to store energy provided by supply voltage VDD in inductor L. Controller 206 and gate drivers 208 may be further configured to turn transistor M4 "on" and "off," based on the duty cycle, to discharge energy stored by inductor L through the load 225. This discharged energy is provided at a desired output voltage that is typically designed to be less than supply voltage VDD. Device 200 provides an output across capacitor C and power provided by device 200 at this output is consumed by load 225.

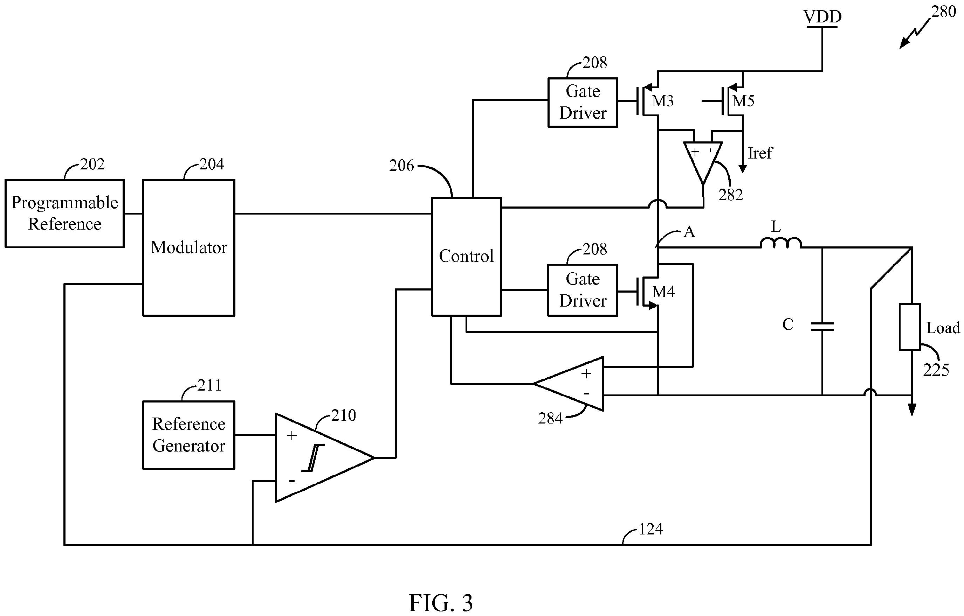

Device 200 may also include one or more current sensors (not shown in FIG. 2; see FIG. 3) for sensing a current through transistor M3 and inductor L while transistor M3 is operating in a conductive state, sensing a current through transistor M4 and inductor L while transistor M4 is operating in a conductive state, or both. As described more fully below, in the event the current through transistor M3 and inductor L is greater than a threshold current, controller 206 may be configured to turn "off" transistor M3 (i.e., cause transistor M3 to operate in a non-conductive state) and turn "on" transistor M4 (i.e., cause transistor M4 to operate in a conductive state).

Additionally, device 200 includes a comparator 210 having one input configured to receive a fixed reference voltage Vref from a reference generator 211 and another input coupled to output voltage Vout. By way of example only, reference voltage Vref may comprise a voltage of substantially 0.25 volts. An output of comparator 210 is coupled to an input of controller 206. Comparator 210 is configured to compare reference voltage Vref and output voltage Vout, and, in response to the comparison, convey a signal to controller 206. If output voltage Vout is greater than reference voltage Vref, comparator 210 may convey a signal indicative thereof to controller 206. Similarly, if output voltage Vout is less than or equal to reference voltage Vref, comparator 210 may convey a signal indicative thereof to controller 206. Stated another way, comparator 210 is configured to detect when the regulator output voltage Vout has dropped below a comparator threshold voltage (i.e., reference voltage Vref) and convey a signal indicating that a runaway condition could occur if the current through inductor L were to cross a current limit threshold value. According to at least one embodiment, comparator 210 may be configured to provide a hysteresis to establish a controlled response if the output voltage Vout of device 200 is hovering near threshold voltage Vth.

A contemplated operation of device 200 will now be described. During operation, controller 206, via gate drivers 208, may vary the duty cycles at which transistors M3 and M4 are turned on to alternately connect and disconnect inductor L to and from supply voltage VDD. As inductor L stores energy and discharges the energy, it produces output voltage Vout, which may be somewhat smaller than supply voltage VDD. Further, device 200 may monitor a current through the high-side FET M3 relative to a threshold current. In addition, device 200 may monitor output voltage Vout and compare output voltage Vout to reference voltage Vref. If at any time the sensed current rises above a threshold current and output voltage is greater than reference voltage, controller 206 may turn the high-side FET M3 "off' and turn the low-side FET "on" for a fixed amount of time. In contrast, if the sensed current rises above a threshold current and output voltage is less than or equal to reference voltage Vref, controller 206 may turn the high-side FET M3 "off" and turn the low-side FET "on" until the current flowing through inductor L is substantially equal to zero.

Another, more specific, contemplated operation of device will now be described. During operation, device 200 may monitor a current through the high-side FET M1 relative to a threshold current. Further, device 200 may monitor output voltage Vout relative to reference voltage Vref. In response to receipt of a signal from comparator 210 indicative of output voltage falling to a value equal to a less than reference voltage Vref, controller 206 may be configured to enable a current limit "foldback mode." If, during the "foldback mode," the current through inductor L ("inductor current") exceeds a current limit threshold (i.e., a reference current), controller 206 may cause the inductor current to ramp down to substantially zero before the inductor current L is allowed to ramp up again. It is noted that the inductor current may be forced to discharge to substantially zero, regardless of the values of supply voltage VDD or output voltage Vout, thereby ensuring that the inductor current cannot runaway. As described with reference to FIG. 3 below, an inductor current upward ramp may be monitored by a comparator (i.e., comparator 282) while transistor M3 is on (i.e., conducting) and an inductor current downward ramp may be monitored by a zero crossing comparator (i.e., comparator 284) while transistor M4 is on (i.e., conducting).

The foldback mode may use two current limit levels (i.e., the current limit threshold and a zero current) to regulate an average inductor current. The average current delivered to the output of regulator 200 while operating in the foldback mode is half of the current limit value, hence the "foldback" terminology. Since the current limit threshold is usually set near a rated current of a regulator (e.g., device 200) delivering half of the current limit value in foldback mode means that the rated load may not be supported in this mode. This is generally not a system limitation for normal operation if the fault comparator reference voltage Vref is set at a low enough threshold where load 225 is not expected to be able to draw the full rated current.

FIG. 3 illustrates a device 280, in accordance with an exemplary embodiment of the present invention. Similar to device 200, device 280 includes programmable reference 202, modulator 204, controller 206, and gate drivers 208. Device 280 further includes transistors M3 and M4, inductor L, capacitor C and load 225. Additionally, device 280 includes comparator 210 having one input configured to receive a fixed reference voltage Vref and another input coupled to output voltage Vout. Further, device 280 includes another comparator 282 including one input coupled to a drain of transistor M3 and another input coupled to a drain of a reference transistor M5. Comparator 282 may be used to monitor a reference current Iref (i.e., a current flowing through transistor M5) relative to a current flowing through transistor M3 and, in response to thereto, convey a signal to controller 206. As noted above, if the current flowing through transistor M3 rises to a value equal to or greater than a threshold current (i.e., reference current), and output voltage Vout is greater than reference voltage Vref, controller 206 may cause the current to be recirculated (i.e., via turning off transistor M3 and turning on transistor M4) for a fixed amount of time.

Moreover, as noted above, if the current through transistor M3 rises to a value equal to or greater than a threshold current, and output voltage Vout is less than or equal to reference voltage Vref, controller 206 may turn high-side FET M3 "off' and turn low-side FET M4 "on" until the current flowing through inductor L is substantially equal to zero. According to one exemplary embodiment, device 280 further includes a comparator 284 including one input coupled to a ground voltage and another input coupled to node A. Comparator 284 may be configured to compare the voltage at node A to the ground voltage and, in response to the comparison, convey a signal to controller 206 indicative of whether a current through inductor L has fallen to substantially zero.

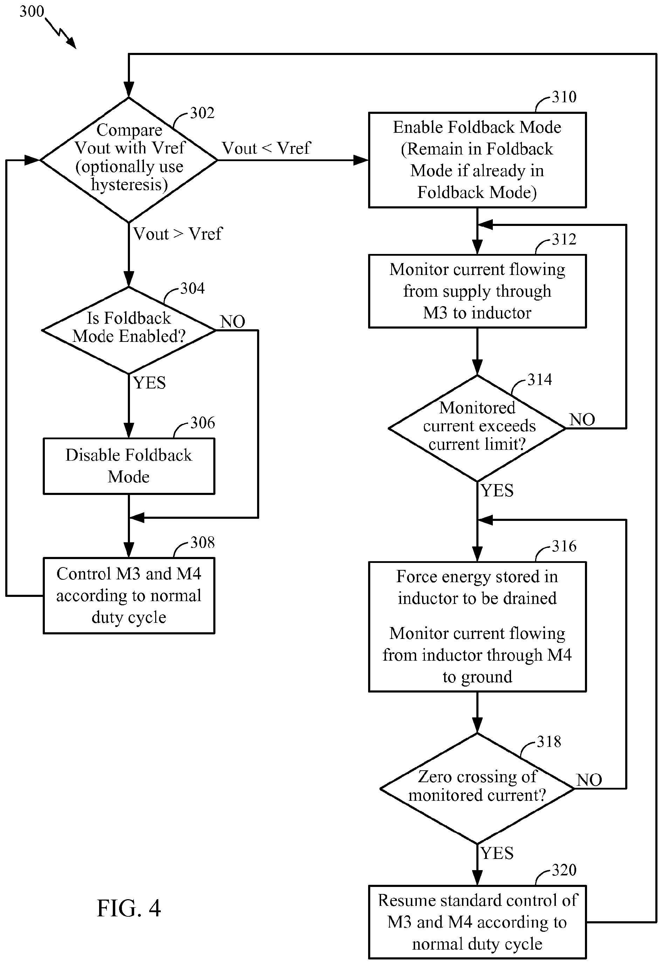

FIG. 4 is a flowchart illustrating a method 300, in accordance with an exemplary embodiment of the present invention. Method 300 will now be described with reference to FIGS. 2-4. At step 302 of method 300, comparator 210 may compare output voltage Vout to a reference voltage Vref. If output voltage Vout is less than reference voltage Vref, comparator 210 may assert a fault flag 130. As noted above, comparator 210 may be configured to use time or voltage hysteresis when comparing reference voltage Vref to output voltage Vout. For example, comparator 210 may output a fault flag 130 when output voltage Vout has been less than or equal to reference voltage Vref for a predetermined amount of time, rather than immediately asserting fault flag 130 as soon as output voltage Vout is less than or equal to reference voltage Vref.

In the event comparator 210 asserts fault flag 130, controller 206 may enable a foldback mode of device 200 (depicted in step 310). If device 200 is already in operating in the foldback mode, device 200 may remain in foldback mode. While in foldback mode, controller 206 may be configured to monitor an amount of current flowing from voltage supply VDD through transistor M3 to inductor L via a current flowing through node A (depicted by reference numeral 312). At step 314, controller 206 may determine, via the current flowing through node A, whether the amount of current flowing through transistor M3 exceeds a current limit. Typically, the current limit for device 200 may be set at a level higher than the amount of current that device 200 is normally expected to deliver to the load.

If controller 206 determines that the monitored current flowing through transistor M3 exceeds the current limit, controller 206, at step 316, may cause the energy stored in inductor L to drain. According to one exemplary embodiment, controller 206 may cause transistor M3 to be turned off and transistor M4 to be turned on (e.g., using gate drivers 208) to drain the energy from inductor L. Transistor M3 may remain off and transistor M4 may remain on until substantially all of the energy stored by inductor L is drained. It is noted that controller 206 may determine when all of the energy has drain from inductor L by monitoring the current flowing through transistor M4. Controller 206 may monitor the current flowing through transistor M4 by monitoring, via comparator 284, a current flowing through transistor M4.

At step 318, controller 206 may determine whether the monitored current flowing through transistor M4 has crossed zero. If so, inductor L has drained substantially all of its energy and, at step 320, controller 206 may resume standard control of transistors M3 and M4, alternately switching transistors M3 and M4 according to a normal duty cycle configured to provide a designed output voltage to the load 122. Operation continues at step 302, where comparator 210 again compares output voltage Vout to reference voltage Vref.

In the event controller 206 determines that the monitored current flowing through transistor M4 has not yet crossed zero, at step 316, transistor M3 may remain off and transistor M4 may remain on so that the energy stored by inductor L continues to drain out of inductor L to ground via transistor M4 and the load. Ensuring that the energy stored by inductor L is drained before transistor M3 is allowed to turn on again may prevent device 200 from experiencing current limit runaway. Note that one result of the combination of steps 316, 318, and 320, is that controller 206 may wait to resume standard control of transistors M3 and M4 until the zero crossing of the monitored current. Thus, controller 206 may wait to resume standard control until all or substantially all of the energy stored by inductor L has been drained no matter how long draining the energy may take. Stated another way, controller 206 may allow inductor L to drain its energy independent of any duty cycle or frequency provided by programmable reference 202 or modulator 204. This may prevent the conditions described earlier that lead to current limit runaway.

Although method 300 is illustrated as a series of sequential steps, it should be appreciated that comparator 210, at step 302, may continuously compare output voltage Vout to reference Vref so that operation of device 200 can change as soon as the relationship between output voltage Vout and reference voltage Vref changes. For example, shortly or immediately after output voltage Vout is less than reference voltage Vref (i.e., taking into account any hysteresis settings as described above), controller 206 may enable foldback mode. Similarly, shortly or immediately after output voltage Vout is greater than reference voltage Vref (i.e., again taking into account any hysteresis setting), controller 206 may disable foldback mode.

Returning now to step 302, if comparator 210 determines that output voltage Vout is greater than reference voltage Vref, comparator 210 may de-assert fault flag 130. At step 304, controller 206 may determine whether device 200 is already in foldback mode. If so, at step 306 controller 206 may disable foldback mode. If device 200 is not operating in foldback mode, operation may continue at step 308. At step 308, controller 206 may continue standard control of transistor M3 and transistor M4, alternately switching transistors M3 and M4 according to a normal duty cycle configured to provide a designed output voltage to the load.

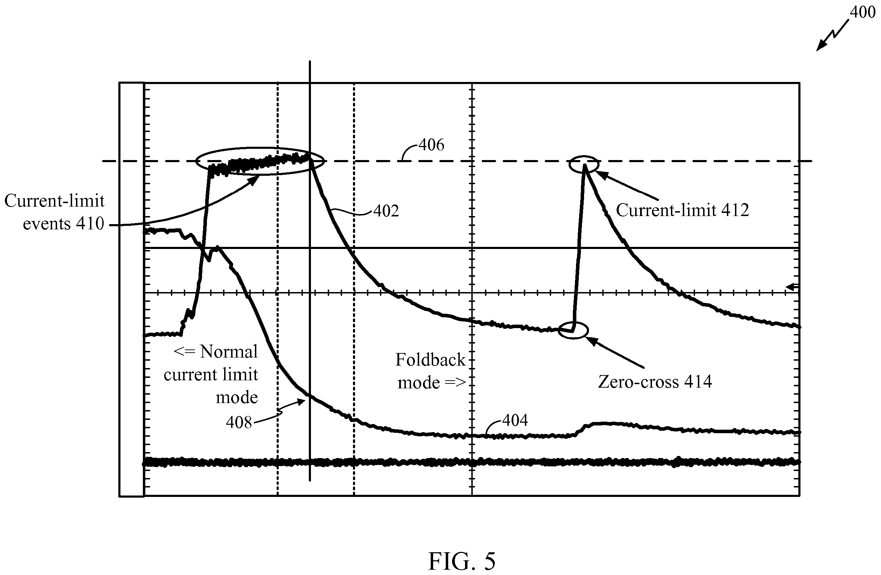

FIG. 5 is a plot 400 depicting various signals of a regulator, such as device 200 illustrated in FIG. 2 or device 280 illustrated in FIG. 3. Signal 402 represents a current flowing through inductor L of the regulator and signal 404 represents output voltage Vout of the regulator. Plot 400 further depicts a current limit value 406. As depicted by reference numeral 410, the current represented by signal 402 approaches the current limit value 406 (e.g., signal 402 is being limited to current limit value 406 using a constant off time). As depicted, the voltage represented by signal 404 begins to drop (e.g., because of a load fault or load short at an output) and when signal 404 crosses the reference voltage Vref at 408, controller 206 (see FIG. 2 or FIG. 3) may cause the regulator to enter foldback mode in which transistor M3 is turned off and transistor M4 is turned on. Consequently, signal 402 representing the current through inductor L begins to decrease as the energy stored by inductor L drains. Eventually, signal 402 crosses zero at 414. At this point, controller 206 may resume standard control of transistors M3 and M4 as indicated by step 302 of method 300. Consequently, signal 402 (i.e., the current through inductor L) increases sharply until it hits the current limit 406 at 412. Note that since signal 404, which represents output voltage Vout, is still below Vref, the buck regulator remains in foldback mode. After reaching the current limit 406 at 412, in accordance with steps 314 and 316 of method 300, signal 402 begins to fall again.

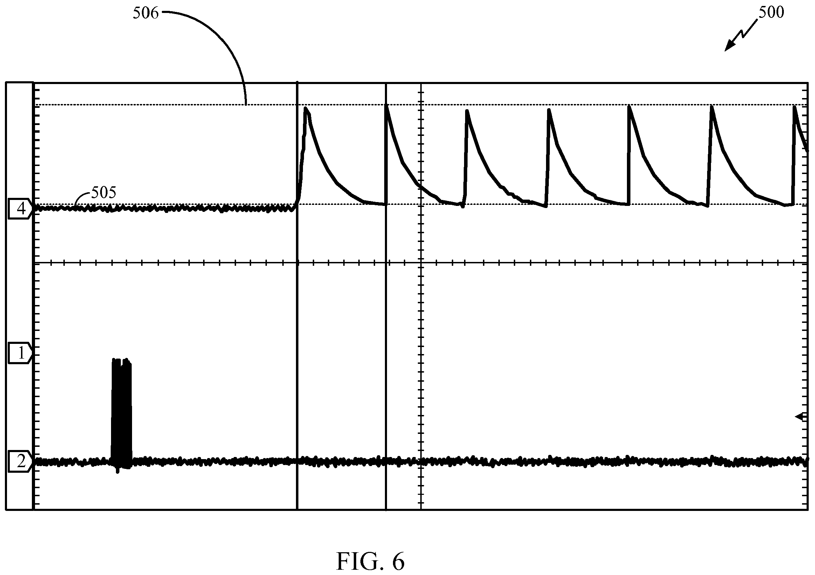

Fig. 6 is another plot 500 depicting a signal 505, which represents a current through inductor L. As illustrated, signal 505 rapidly rises until it hits current limit 506, and then falls until it crosses zero, at which point it rapidly rises again until it hits current limit 506. These cycles illustrate foldback mode in which the average current delivered by the regulator "folds back" to a value of about one half of the current limit.

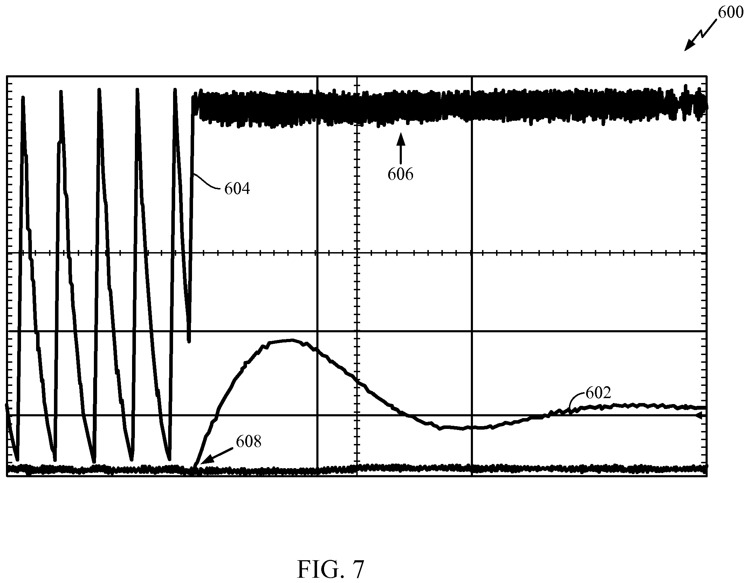

FIG. 7 is yet another plot 600 depicting a regulator (e.g., device 200) exiting foldback mode and resuming normal duty cycle operation (i.e., non foldback current limit operation). Output voltage Vout is illustrated as signal 602, current through inductor L is illustrated as plots 604 and 606. Prior to a point depicted by reference numeral 608, signal 602 (i.e., output voltage Vout) is below reference voltage Vref and the regulator is in foldback mode. Due to a short or fault associated with load 225, current 604 oscillates between the current limit and zero in foldback mode. When output voltage 602 rises above Vref at point 608, the regulator exits foldback mode. However, the short or fault associated with load 225 is still present to at least some degree. Consequently, current 606 hovers near the current limit.

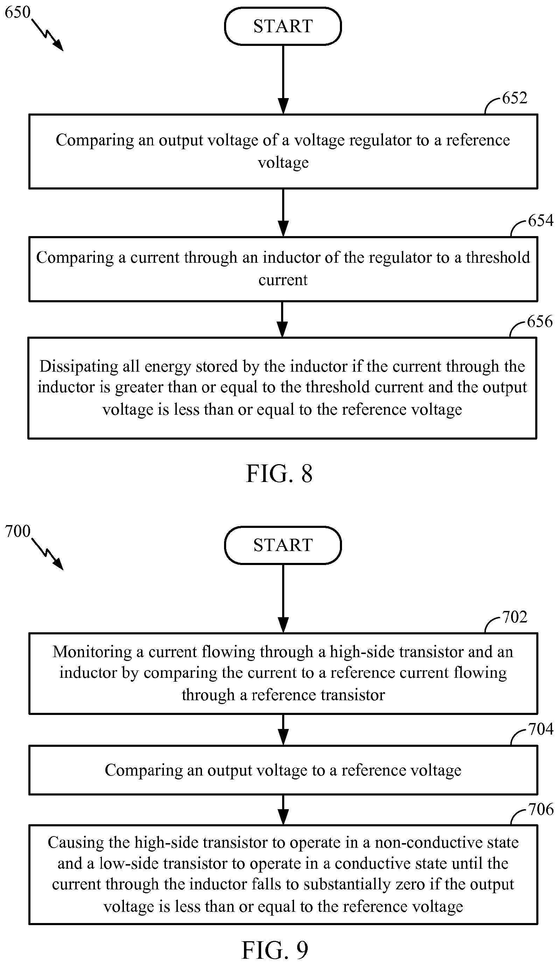

FIG. 8 is a flowchart illustrating a method 650, in accordance with one or more exemplary embodiments. Method 650 may include comparing an output voltage of a voltage regulator to a reference voltage (depicted by numeral 652). Method 650 may also include comparing a current through an inductor of the regulator to a threshold current (depicted by numeral 654). In addition, method 650 may include dissipating all energy stored by the inductor if the current through the inductor is greater than or equal to the threshold current and the output voltage is less than or equal to the reference voltage (depicted by numeral 656).

FIG. 9 is a flowchart illustrating another method 700, in accordance with one or more exemplary embodiments. Method 700 may include monitoring a current flowing through a high-side transistor and an inductor by comparing the current to a reference current flowing through a reference transistor (depicted by numeral 702). In addition, method 700 may also include comparing an output voltage to a reference voltage (depicted by numeral 704). Method 700 may also include causing the high-side transistor to operate in a non-conductive state and a low-side transistor to operate in a conductive state until the current through the inductor falls to substantially zero if the output voltage is less than or equal to the reference voltage (depicted by numeral 706).

In comparison to conventional systems where a current limit runaway may occur when a current limit algorithm does not allow for sufficient time to dissipate more inductor energy during a high-side FET off time than the inductor energy that is put in during a high-side FET on time, the present invention forces the energy stored in an inductor of a buck regulator to dissipate completely or substantially completely when the output voltage of the buck regulator falls below a threshold voltage.

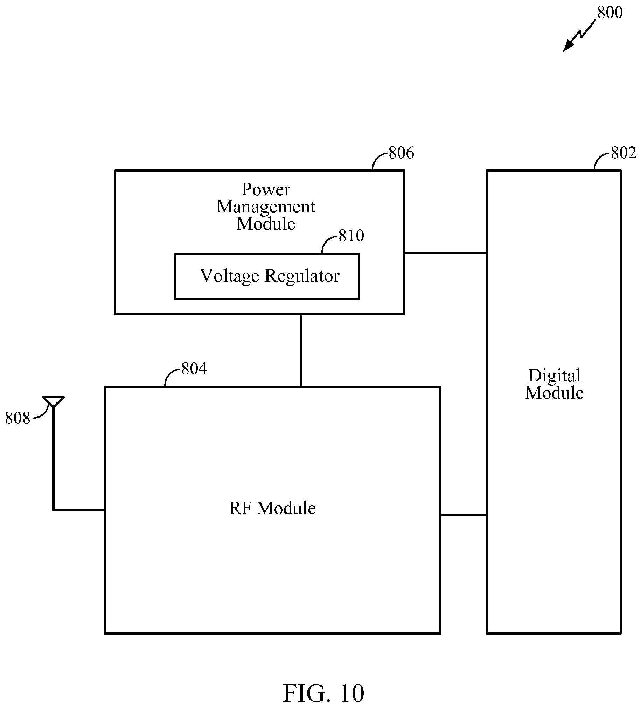

FIG. 10 is a block diagram of an electronic device 800, according to an exemplary embodiment of the present invention. According to one example, device 800 may comprise a portable electronic device, such as a mobile telephone. Device 800 may include various modules, such as a digital module 802, an RF module 804, and power management module 806. Digital module 802 may comprise memory and one or more processors. RF module 804, which may comprise RF circuitry, may include a transceiver including a transmitter and a receiver and may be configured for bi-directional wireless communication via an antenna 808. In general, wireless communication device 800 may include any number of transmitters and any number of receivers for any number of communication systems, any number of frequency bands, and any number of antennas. According to an exemplary embodiment of the present invention, power management module 906 may include one or more of voltage regulators 810, which may comprise one or more of device 200 (see FIG. 2), one or more of device 280 (see FIG. 3), or a combination thereof.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the exemplary embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the exemplary embodiments of the invention.

The various illustrative logical blocks, modules, and circuits described in connection with the exemplary embodiments disclosed herein may be implemented or performed with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

## Claims

1. A device (200), comprising:
an inductor (110, L) selectively coupled to an output and a power supply;
a first transistor (102, M3) coupled between the power supply and the inductor;
a second transistor (104, M4) coupled to the first transistor and between the inductor and a ground voltage; and
a controller (206) configured to:
detect (314) an over-current event if an amount of current flowing from the power supply to the inductor is equal to or greater than a current threshold;
detect (302) a low-voltage event if a voltage at the output is less than or equal to a reference voltage; and
in response to the over-current event and the low-voltage event, prevent current from flowing from the power supply to the inductor until all energy stored by the inductor has been dissipated (316, 318), and when substantially all energy stored by the inductor has been dissipated, continue standard control of the first transistor and the second transistor, alternately switching the first and second transistors according to a normal duty cycle configured to provide a designed output voltage; and
the device further comprising a comparator (210) configured to compare the voltage at the output and the reference voltage and convey a signal (130) to the controller indicative of the comparison.

2. The device of claim 1, further comprising a second comparator (282) configured to compare a current through the first transistor and a third transistor coupled to the first transistor; and preferably
the controller further configured to receive an output of the second comparator to detect if the amount of current from the power supply to the inductor is equal to or greater than the current threshold.

3. The device of claim; 1, further comprising a third comparator (284) coupled to the second transistor and configured to detect an amount of current flowing through the second transistor.

4. The device of claim 1, wherein the reference voltage comprises a voltage of substantially 0.25 volts.

5. The device of claim 1, further comprising a current sensor configured to monitor the current flowing from the power supply to the inductor, the current sensor comprising:
the first transistor (M3) coupled between the supply voltage and the inductor; and
a third transistor (M5) coupled to the supply voltage and the ground voltage; and
a comparator (282) coupled to each of the first and third transistors and configured to detect a relationship between a current flowing through the first transistor and a reference current (Iref) flowing through the third transistor; or
the controller further configured to, in response to the voltage being greater than the reference voltage and the current being greater than the threshold current, electrically isolate the inductor from the supply voltage for a fixed duration; or
further comprising a current sensor configured to detect an amount of energy stored in the inductor, the current sensor comprising a comparator having inputs coupled to the inductor and the ground voltage and an output coupled to the controller.

6. The device of claim 1, the controller configured to enable a foldback mode if the voltage at the output is less than the reference voltage; and preferably
the controller further configured to electrically isolate the inductor from the supply voltage until substantially all energy stored in the inductor has been dissipated if the current flowing from the power supply to the inductor is greater than the current threshold during the foldback mode.

7. A method, comprising:
comparing an output voltage of a voltage regulator to a reference voltage;
comparing a current through an inductor (110, L) of the voltage regulator to a threshold current; and
wherein comparing the output voltage comprises comparing the output voltage and the reference voltage with a comparator (210), and conveying a signal from the comparator to a controller indicative of a relationship of the output voltage relative to the reference voltage; and preventing current from flowing from a power supply to the inductor until all energy stored by the inductor has been dissipated if the current through the inductor is greater than or equal to the threshold current and the output voltage is less than or equal to the reference voltage; and
when substantially all energy stored by the inductor has been dissipated, continue standard control of a first transistor (102, M3) and a second transistor (104, M4), alternately switching the first and second transistors according to a normal duty cycle configured to provide a designed output voltage, wherein the first transistor (102, M3) is coupled between the power supply and the inductor, and the second transistor (104, M4) is coupled to the first transistor and between the inductor and a ground voltage.

8. The method of claim: 7, wherein comparing the current comprises comparing the current through the inductor to the threshold current flowing through a reference transistor; or
wherein dissipating comprises electrically isolating the inductor from a supply voltage of the power supply until the current through the inductor is substantially zero.

## Patentansprüche

1. Eine Einrichtung (200), die Folgendes aufweist:
eine Induktivität (110, L), die selektiv an einen Ausgang und eine Leistungsversorgung gekoppelt ist;
einen ersten Transistor (102, M3), der zwischen die Leistungsversorgung und die Induktivität gekoppelt ist;
einen zweiten Transistor (104, M4), der zwischen den ersten Transistor und zwischen die Induktivität und eine Massespannung gekoppelt ist; und
einen Controller (206), der konfiguriert ist zum:
Detektieren (314) eines Überstromereignisses, wenn eine Menge an Strom, der von der Leistungsversorgung zu der Induktivität fließt, gleich oder größer als ein Stromschwellenwert ist;
Detektieren (302) eines Niederspannungsereignisses, wenn eine Spannung an dem Ausgang kleiner als oder gleich einer Referenzspannung ist; und ansprechend auf das Überstromereignis und das Niederspannungsereignis, Verhindern, dass Strom von der Leistungsversorgung zu der Induktivität fließt, bis die gesamte Energie, die durch die Induktivität gespeichert ist, abgeführt worden ist (316, 318), und wenn im Wesentlichen die gesamte Energie, die durch die Induktivität gespeichert wird, abgeführt worden ist, Fortfahrend mit einer Standardsteuerung des ersten Transistors und des zweiten Transistors, und zwar alternierendes Schalten des ersten und zweiten Transistors gemäß einem normalen Lastzyklus, der konfiguriert ist eine geplante Ausgangsspannung vorzusehen; und
wobei die Einrichtung weiter ein Vergleichselement bzw. einen Komparator (210) aufweist, der konfiguriert ist zum Vergleichen der Spannung an dem Ausgang mit der Referenzspannung und zum Übermitteln eines Signals (130) an den Controller, das den Vergleich anzeigt.

2. Einrichtung nach Anspruch 1, die weiter einen zweiten Komparator (282) aufweist, der konfiguriert ist zum Vergleichen eines Stroms durch den ersten Transistor und einen dritten Transistor, der an den ersten Transistor gekoppelt ist; und wobei vorzugsweise
der Controller weiter konfiguriert ist zum Empfangen einer Ausgabe des zweiten Komparators, um zu detektieren, ob die Menge an Strom von der Leistungsversorgung an die Induktivität gleich oder größer als der Stromschwellenwert ist.

3. Einrichtung nach Anspruch 1, die weiter einen dritten Komparator (284) aufweist, der an den zweiten Transistor gekoppelt ist und konfiguriert ist zum Detektieren einer Menge an Strom, die durch den zweiten Transistor fließt.

4. Einrichtung nach Anspruch 1, wobei die Referenzspannung eine Spannung von im Wesentlichen 0,25 Volt aufweist.

5. Einrichtung nach Anspruch 1, die weiter einen Stromsensor aufweist, der konfiguriert ist zum Überwachen des Stroms, der von der Leistungsversorgung an die Induktivität fließt, wobei der Stromsensor Folgendes aufweist:
einen ersten Transistor (M3), der zwischen die Versorgungsspannung und die Induktivität gekoppelt ist; und
einen dritten Transistor (M5), der an die Versorgungsspannung und die Massespannung gekoppelt ist; und
ein Vergleichselement bzw. einen Komparator (282), der an jeden von dem ersten und dritten Transistor gekoppelt ist und konfiguriert ist zum Detektieren einer Beziehung zwischen einem Strom, der durch den ersten Transistor fließt und einem Referenzstrom (Iref), der durch den dritten Transistor fließt; oder
wobei der Controller weiter konfiguriert ist zum, ansprechend darauf, dass die Spannung größer als die Referenzspannung ist und der Strom größer als der Schwellenwertstrom ist, elektrischen Isolieren der Induktivität von der Versorgungsspannung für eine festgelegte Dauer; oder
die weiter einen Stromsensor aufweist, der konfiguriert ist zum Detektieren einer Größe an Energie, die in der Induktivität gespeichert ist, wobei der Stromsensor einen Komparator aufweist, der Eingänge, die an die Induktivität und die Massespannung gekoppelt sind, und einen Ausgang, der an den Controller gekoppelt ist, hat.

6. Einrichtung nach Anspruch 1, wobei der Controller konfiguriert ist einen Foldback-Modus zu aktivieren, wenn die Spannung an dem Ausgang niedriger als die Referenzspannung ist; und wobei vorzugsweise der Controller weiter konfiguriert ist zum elektrischen Isolieren der Induktivität von der Versorgungsspannung, bis im Wesentlichen die gesamte Energie, die in der Induktivität gespeichert ist, abgeleitet worden ist, wenn der Strom, der von der Leistungsversorgung zu der Induktivität fließt, größer als der Stromschwellenwert während des Foldback-Modus ist.

7. Ein Verfahren, das Folgendes aufweist:
Vergleichen einer Ausgangsspannung eines Spannungsreglers mit einer Referenzspannung;
Vergleichen eines Stroms durch eine Induktivität (110, L) des Spannungsreglers mit einem Schwellenwertstrom; und
wobei das Vergleichen der Ausgangsspannung Vergleichen der Ausgangsspannung und der Referenzspannung mit einem Komparator (210), und das Übermitteln eines Signals von dem Komparator zu einem Controller, das eine Beziehung der Ausgangsspannung relativ zu der Referenzspannung anzeigt, aufweist; und
Verhindern, dass Strom von einer Leistungsversorgung zu der Induktivität fließt, bis die gesamte Energie, die in der Induktivität gespeichert ist, abgeführt worden ist, wenn der Strom durch die Induktivität größer als oder gleich dem Schwellenwertstrom ist, und die Ausgangsspannung kleiner als oder gleich der Referenzspannung ist; und
wenn im Wesentlichen die gesamte Energie, die durch die Induktivität gespeichert ist, abgeführt worden ist, Fortfahren mit einer Standardsteuerung eines ersten Transistors (102, M3) und eines zweiten Transistors (104, M4), wobei alternierend der erste und zweite Transistor gemäß einem normalen Lastzyklus, der konfiguriert ist eine geplante Ausgangsspannung vorzusehen, geschaltet werden, wobei der erste Transistor (102, M3) zwischen die Leistungsversorgung und die Induktivität gekoppelt ist, und der zweite Transistor (104,M4) an den ersten Transistor und zwischen die Induktivität und eine Massespannung gekoppelt ist.

8. Verfahren nach Anspruch 7, wobei das Vergleichen des Stroms Vergleichen des Stroms durch die Induktivität mit einem Schwellenwertstrom aufweist, der durch einen Referenztransistor fließt; oder
wobei das Abführen elektrisches Isolieren der Induktivität von der Versorgungsspannung der Leistungsversorgung aufweist, bis der Strom durch die Induktivität im Wesentlichen Null ist.

## Revendications

1. Dispositif (200), comprenant :
un inducteur (110, L) couplé sélectivement à une sortie et à une alimentation ;
un premier transistor (102, M3) couplé entre l'alimentation et l'inducteur ;
un deuxième transistor (104, M4) couplé au premier transistor et entre l'inducteur et une tension de masse ; et
un contrôleur (206) configuré pour :
détecter (314) un événement de surintensité si une quantité de courant circulant depuis l'alimentation vers l'inducteur est égale ou supérieure à un seuil de courant ;
détecter (302) un événement basse tension si une tension à la sortie est inférieure ou égale à une tension de référence ; et
en réponse à l'événement de surintensité et à l'événement de basse tension, empêcher le courant de circuler depuis l'alimentation vers l'inducteur jusqu'à ce que toute l'énergie stockée par l'inducteur ait été dissipée (316, 318), et, lorsque presque toute l'énergie stockée par l'inducteur a été dissipée, continuer une commande classique du premier transistor et du deuxième transistor, en commutant alternativement les premier et deuxième transistors conformément à un rapport cyclique normal configuré pour fournir une tension de sortie prévue ; et
le dispositif comprenant en outre un comparateur (210) configuré pour comparer la tension à la sortie et la tension de référence et transmettre un signal (130) au contrôleur indicatif de la comparaison.

2. Dispositif selon la revendication 1, comprenant en outre un deuxième comparateur (282) configuré pour comparer un courant circulant dans le premier transistor et un troisième transistor couplé au premier transistor ; et, de préférence,
le contrôleur étant en outre configuré pour recevoir une sortie du deuxième comparateur pour détecter si la quantité de courant circulant depuis l'alimentation vers l'inducteur est égale ou supérieure au seuil de courant.

3. Dispositif selon la revendication 1, comprenant en outre un troisième comparateur (284) couplé au deuxième transistor et configuré pour détecter une quantité de courant circulant dans le deuxième transistor.

4. Dispositif selon la revendication 1, dans lequel la tension de référence comprend une tension de sensiblement 0,25 volts.

5. Dispositif selon la revendication 1, comprenant en outre un capteur de courant configuré pour surveiller le courant circulant depuis l'alimentation vers l'inducteur, le capteur de courant comprenant :
le premier transistor (M3) couplé entre la tension d'alimentation et l'inducteur ; et
un troisième transistor (M5) couplé à la tension d'alimentation et à la tension de masse ; et
un comparateur (282) couplé à chacun des premier et troisième transistors et configuré pour détecter une relation entre un courant circulant dans le premier transistor et un courant de référence (Iref) circulant dans le troisième transistor ; ou
le contrôleur étant en outre configuré étant configuré en outre pour, en réponse au fait que la tension soit supérieure à la tension de référence et que le courant soit supérieur au courant de seuil, isoler électriquement l'inducteur de la tension d'alimentation pendant une durée fixe ; ou
comprenant en outre un capteur de courant configuré pour détecter une quantité d'énergie stockée dans l'inducteur, le capteur de courant comprenant un comparateur ayant des entrées couplées à l'inducteur et à la tension de masse et une sortie couplée au contrôleur.

6. Dispositif selon la revendication 1, le contrôleur étant configuré pour activer un mode de repli si la tension à la sortie est inférieure à la tension de référence ; et, de préférence,
le contrôleur étant en outre configuré pour isoler électriquement l'inducteur de la tension d'alimentation jusqu'à ce que presque toute l'énergie stockée dans l'inducteur ait été dissipée si le courant circulant depuis l'alimentation vers l'inducteur est supérieur au seuil de courant pendant le mode de repli.

7. Procédé, comprenant :
la comparaison d'une tension de sortie d'un régulateur de tension à une tension de référence ;
la comparaison d'un courant circulant dans un inducteur (110, L) du régulateur de tension à un courant de seuil ; et
dans lequel la comparaison de la tension de sortie comprend la comparaison de la tension de sortie et de la tension de référence avec un comparateur (210), et transmettre un signal depuis le comparateur vers un contrôleur indicatif d'une relation entre la tension de sortie et la tension de référence ; et
empêcher le courant de circuler depuis une alimentation vers l'inducteur jusqu'à ce que toute l'énergie stockée par l'inducteur ait été dissipée si le courant circulant dans l ' inducteur est supérieur ou égal au courant de seuil et la tension de sortie est inférieure ou égale à la tension de référence ; et
lorsque presque toute l'énergie stockée par l'inducteur a été dissipée, continuer une commande standard d'un premier transistor (102, M3) et d'un deuxième transistor (104, M4), en commutant alternativement les premier et deuxième transistors conformément à un rapport cyclique normal configuré pour fournir une tension de sortie prévue, dans lequel le premier transistor (102, M3) est couplé entre l'alimentation et l'inducteur, et le deuxième transistor (104, M4) est couplé au premier transistor et entre l'inducteur et une tension de masse.

8. Procédé selon la revendication 7, dans lequel la comparaison du courant comprend la comparaison du courant circulant dans l'inductance au courant de seuil circulant dans un transistor de référence ; ou
dans lequel la dissipation comprend l'isolement électrique de l'inducteur de la tension d'alimentation de l'alimentation jusqu'à ce que le courant circulant dans l'inducteur soit sensiblement nul.
